# FASCICULE DE BREVET EUROPEEN

(11) **EP 1 739 010 B1**
(45) Date de publication et mention de la délivrance du brevet: **04.06.2008**
(21) Numéro de dépôt: 06290976.7
(22) Date de dépôt: 15.06.2006
(51) Int. Cl.: B64C 25/44, B64C 25/26, B60T 8/17

(54) **Architecture distribuée de systeme de gestion d'atterrisseurs d'aeronef**
Verteilte Architektur eines Kontrollsystems eines Flugzeug-Fahrgestells
Distributed architecture of aircraft undercarriage control system

(30) Priorité: 27.06.2005 FR 0506498
(43) Date de publication de la demande: 03.01.2007
(73) Titulaire: MESSIER-BUGATTI, 78140 Velizy, Villacoublay (FR)
(72) Inventeur: Garcia, Jean-Pierre, 31770 Colomiers (FR)
(74) Mandataire: Parzy, Benjamin Alain

(56) Documents cités:
- EP-A- 1 310 848
- EP-A- 1 484 244
- US-A- 2 612 331
- US-A1- 2003 111 895
- US-A1- 2004 239 173
- US-A1- 2005 082 427
- US-B1- 6 390 571

## Description

L'invention concerne une architecture distribuée de système de gestion d'atterrisseurs d'aéronef.

### ARRIERE-PLAN DE L'INVENTION

Les atterrisseurs d'un aéronef sont en général escamotables et comportent à cet effet des actionneurs de manoeuvre (vérins hydrauliques, actionneurs électriques, crochets de verrouillage...) qui commandent l'extension et la rétraction des atterrisseurs ainsi que des portes des soutes de réception des atterrisseurs en position rétractée. L'aéronef porte divers capteurs de position adaptés à repérer les positions des atterrisseurs et des portes et dont les informations servent à la mise en oeuvre d'une logique déterminée d'extension ou de rétraction initiée en réponse à un ordre du pilote.

Les atterrisseurs d'un aéronef, et spécialement l'atterrisseur auxiliaire, comportent en outre des parties mobiles adaptées à permettre une orientation des roues pour assurer la conduite de l'aéronef au sol. A cet effet, l'aéronef porte des actionneurs d'orientation (vérin, moteur électrique...) qui sont adaptés à orienter les roues orientables. L'aéronef comporte divers capteurs (position angulaire des roues,vitesse...) dont les informations servent à la mise en oeuvre d'un asservissement d'orientation adapté à orienter les roues en réponse à une consigne d'orientation du pilote.

Les atterrisseurs d'un aéronef portent également des freins qui comportent des actionneurs de freinage (pistons hydrauliques, poussoirs commandés par un moteur électrique...) pour appliquer sélectivement un effort de freinage sur des disques de friction adaptées à ralentir la rotation des roues. L'aéronef porte divers capteurs (vitesse de rotation des roues, intensité du freinage...) dont les informations servent à la mise en oeuvre d'un asservissement de freinage adapté à appliquer sur les roues un effort donné de freinage en réponse à une consigne de freinage du pilote. L'asservissement comporte une fonction d'anti-glissement qui soulage l'effort de freinage sur une roue en cas de glissement de celle-ci.

Ces divers actionneurs sont commandés par un système de gestion d'atterrisseurs.

Selon une architecture connue de système de gestion d'atterrisseurs, le système de gestion comporte un calculateur de freinage (comportant en général une voie active et une voie de surveillance) pour commander les actionneurs de freinage, un calculateur d'orientation pour commander l'actionneur d'orientation et un calculateur de manoeuvre pour commander les actionneurs de manoeuvre. Chacun des calculateurs est connecté par des simples liaisons point à point aux capteurs nécessaire à la mise en oeuvre de la fonction associée, l'un des calculateurs pouvant être relié à un autre calculateur pour lui fournir une information discrète, comme par exemple une indication de fonctionnement ou de non-fonctionnement.

Ce type d'architecture nécessite de nombreux câbles et requiert de dupliquer certains calculateurs gérant des fonctions critiques, comme le freinage.

Un autre état de la technique connu, utilisé par exemple pour l'A380, est appelé avionique modulaire intégrée. Les fonctions de manoeuvre des atterrisseurs et d'orientation sont intégrées dans des calculateurs centraux de l'aéronef qui sont en communication avec des concentrateurs de données via des bus de communication monodirectionnels du type ARINC 429. Les calculateurs sont reliés entre eux par l'intermédiaire d'un bus bidirectionnel asynchrone de type AFDX permettant le transfert de données entre calculateurs. Par contre, le freinage, et spécialement l'asservissement d'antiglissement, reste assuré par un calculateur spécifique non intégré aux calculateurs centraux de l'aéronef et délocalisé au voisinage des freins pour être en relation directe avec les capteurs associés.

Cette architecture reste inhomogène, avec des calculateurs spécifiques disposés dans des endroits non sécurisés de l'aéronef et nécessitant des liaisons locales non intégrées dans des réseaux de communication.

On connaît par ailleurs, dans le domaine automobile, des architectures de freinage à réseau de communication synchrone, dans lequel une unité de commande intégrant un asservissement d'antiglissement commande des actionneurs de freinage reliés au réseau de communication synchrone des capteurs associés aux freins étant également reliés aux réseaux de communication. Les réseaux de communication synchrones envisagés (par exemple de type TTP, FLEXRAY) présentent une vitesse de transmission et un mode de gestion des transmissions compatibles avec la rapidité et la stabilité de l'asservissement d'antiglissement.

### OBJET DE L'INVENTION

L'invention a pour objet une architecture simplifiée de gestion d'atterrisseurs d'aéronefs.

### BREVE DESCRIPTION DE L'INVENTION

En vue de la réalisation de ce but, on propose une architecture de système de gestion d'atterrisseurs d'aéronef apte à assurer au moins une fonction choisie parmi :
- la manoeuvre d'extension/rétraction des atterrisseurs rétractables au moyen d'actionneurs de manoeuvre et d'informations de manoeuvre en provenance de capteurs associés ;
- l'orientation de roues orientables portées par l'un au moins des atterrisseurs au moyen d'actionneurs d'orientation et d'informations d'orientation en provenance de capteurs associés ;
l'architecture étant apte à assurer également le freinage des roues freinées portées par l'un au moins des atterrisseurs au moyen d'actionneurs de freinage et d'informations de freinage en provenance de capteurs associés;
l'architecture comportant au moins un réseau de communication auquel sont reliés :
- au moins une partie des actionneurs de manoeuvre et/ou des actionneurs d'orientation et les capteurs associés à ces actionneurs,
- une ou plusieurs unités de commande adaptées à commander les actionneurs de manoeuvre et/ou les actionneurs d'orientation reliés au réseau de communication en fonction des informations délivrées par les capteurs associés ;
dans laquelle, selon l'invention, au moins une partie des actionneurs de freinage et les capteurs associés à ces actionneurs sont reliés au réseau de communication, la ou les unités de commande assurant la commande des actionneurs de freinage reliés au réseau de communication, le réseau de communication ayant des caractéristiques de transmission adaptées à la mise en oeuvre par la ou les unités de commande d'un asservissement d'antiglissement pour la commande des actionneurs de freinage.

Ainsi, un même réseau est utilisé pour réaliser, en plus des autres fonctions (manoeuvre, orientation), la fonction de freinage, grâce à l'utilisation d'un réseau de communication adapté qui permet de mettre en oeuvre les trois fonctions sur le même réseau de communication. Cette disposition permet de simplifier considérablement l'architecture de gestion des atterrisseurs.

### BREVE DESCRIPTION DES DESSINS

L'invention sera mieux comprise à la lumière de la description qui suit en référence aux figures parmi lesquels
- la figure 1 qui illustre un aéronef commercial à huit roues freinées ;
- les figures 2A et 2B représentant un unique schéma d'architecture selon l'invention qui a été partagé en deux figures pour des raisons d'encombrement. Les deux figures se recouvrent, au niveau de la partie centrale du schéma montrant l'atterrisseur auxiliaire.

### DESCRIPTION DETAILLEE DE L'INVENTION

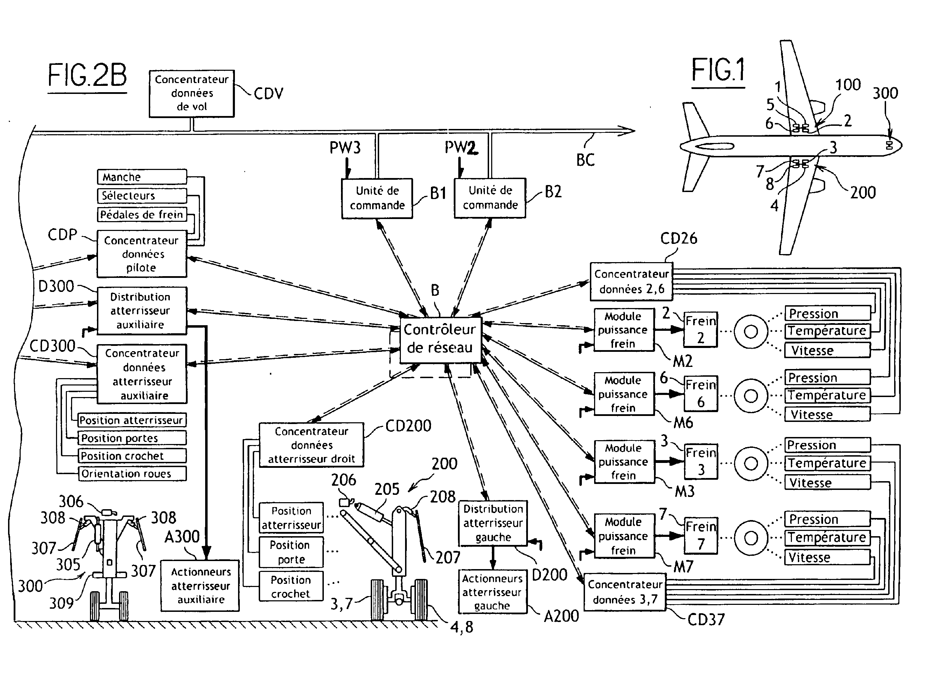

L'aéronef illustré schématiquement à la figure 1 est un aéronef commercial classique comportant un atterrisseur principal gauche 100, un atterrisseur principal droit 200, et un atterrisseur auxiliaire 300.

L'atterrisseur principal gauche 100 porte quatre roues freinées équipées de freins ou actionneurs de freinage respectivement référencés 1,2,5,6 tandis que l'atterrisseur principal droit 200 porte quatre roues freinées équipées de freins ou actionneurs de freinage respectivement référencées 3,4,7,8.

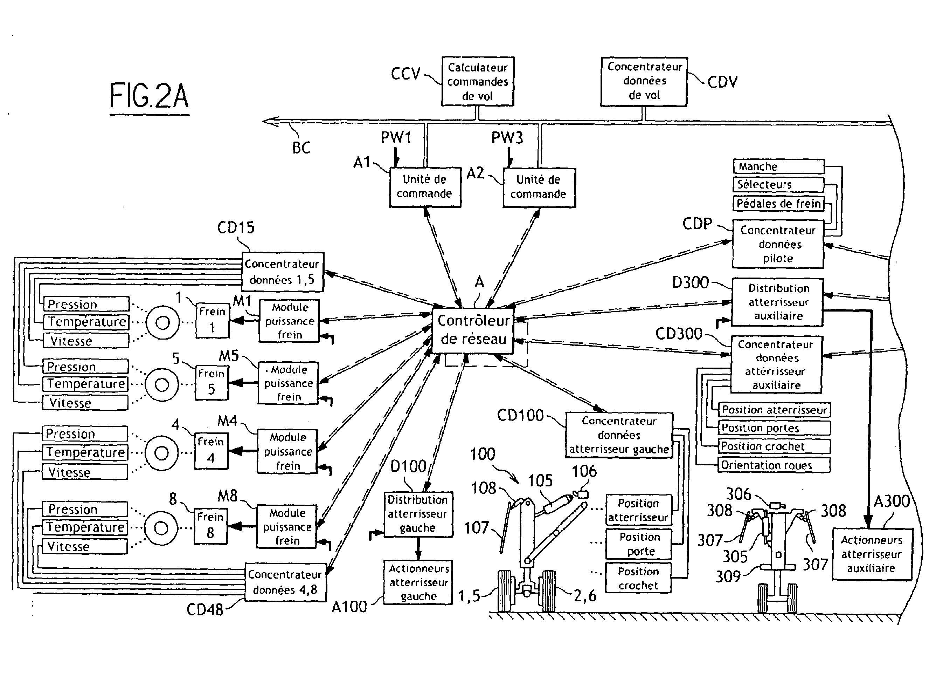

L'architecture de l'invention est maintenant détaillée en référence aux figures 2A et 2B, prises ensemble.

L'atterrisseur principal gauche 100 est associé pour sa manoeuvre à un vérin de relevage 105 et à un crochet de verrouillage 106. Des portes 107 munies de vérins de manoeuvre 108 ouvrent et ferment la soute de réception de l'atterrisseur principal gauche 100.

De même, l'atterrisseur principal droit 200 est associé pour sa manoeuvre à un vérin de relevage 205 et à un crochet de verrouillage 206. Des portes 207 munies de vérins de manoeuvre 208 ouvrent et ferment la soute de réception de l'atterrisseur principal droit 200.

Enfin, l'atterrisseur auxiliaire 300 est associé pour sa manoeuvre à un vérin de relevage 305 et à un crochet de verrouillage 306. Des portes 307 munies de vérins de manoeuvre 308 ouvrent et ferment la soute de réception de l'atterrisseur auxiliaire 300. L'atterrisseur auxiliaire 300 comporte en outre un organe d'orientation 309 (par exemple un vérin à crémaillère) pour commander la rotation des roues portées par le dit atterrisseur en vue de diriger l'aéronef au sol.

Chacun des freins 1,2... 8 est associé à un module de puissance M1,M2... M8 correspondant chargé de transmettre au frein associé une puissance proportionnelle à une consigne de freinage. Dans le cas de freins hydrauliques, le module de puissance est une servovalve adaptée à transmettre au frein une pression proportionnelle à une consigne électrique de freinage. Dans le cas de freins électromécaniques, le module de puissance est un convertisseur adapté à transmettre au frein un courant de puissance proportionnel à une consigne électrique de freinage.

De même, chacun des actionneurs d'un atterrisseur est associé à un organe de distribution de puissance chargé d'alimenter les actionneurs en réponse à des ordres d'actionnement. Sur l'architecture, les actionneurs sont regroupés symboliquement dans les cases « actionneurs atterrisseur gauche », « actionneurs atterrisseur droit » et « actionneurs atterrisseur auxiliaire », respectivement référencées A100, A200 et A300. Les organes de distribution de puissance correspondants sont référencés D100,D200 et D300.

Dans le cas d'actionneurs hydrauliques, l'organe de distribution comprend diverses vannes commandées électriquement permettant de relier sélectivement les actionneurs à une source de pression de l'aéronef. Dans le cas d'actionneurs électriques, l'organe de distribution comprend des interrupteurs commandés électriquement permettant de relier sélectivement les actionneurs à une source de courant de l'aéronef.

Les flèches en traits épais symbolisent le flux de puissance vers les freins et vers les actionneurs.

L'architecture de l'invention illustrée ici permet de gérer toutes les fonctionnalités associées aux atterrisseurs : freinage, manoeuvre, orientation, en agissant sur les divers actionneurs associés aux atterrisseurs.

Pour ce faire, l'architecture de l'invention met en oeuvre un premier réseau de communication en étoile A et un deuxième réseau de communication en étoile B, les références A et B étant utilisées par la suite pour désigner le réseau de communication lui-même ou le contrôleur de réseau associé, que l'on distingue sur les figures au centre du réseau de communication correspondant.

Le contrôleur de réseau A est relié :
- aux modules de puissance M1 et M5 des freins 1 et 5 externes de l'atterrisseur principal gauche 100 ;
- aux modules de puissance M4 et M8 des freins 4 et 8 externes de l'atterrisseur principal droit 200 ;
- à l'organe de distribution D100 associé aux actionneurs de manoeuvre A100 de l'atterrisseur principal gauche 100 ;
- à l'organe de distribution D300 associé aux actionneurs de manoeuvre et d'orientation A300 de l'atterrisseur auxiliaire 300.

Le contrôleur de réseau A est également relié à deux unités de commande A1 et A2 qui sont aptes à générer des consignes ou des ordres à destination des modules de puissance et des organes de distribution reliés au contrôleur de réseau A. Les deux unités de commande sont en permanence actives, l'une des unités de commande générant les consignes et ordres en étant surveillée par l'autre unité de commande.

Les unités de commande A1 et A2 sont donc aptes à gérer :
- le freinage des freins 1,5,4,8 ;
- la manoeuvre de l'atterrisseur principal gauche 100 et la manoeuvre de l'atterrisseur auxiliaire 300 ;
- l'orientation des roues de l'atterrisseur auxiliaire 300.

Pour ce faire, les unités de commande A1 et A2 reçoivent des informations de concentrateurs de données également reliés au réseau de communication A :
- un concentrateur de données CD15 qui reçoit et met en forme des informations électriques telles que la pression dans les pneumatiques des roues 1,5, la température des freins 1,5, la vitesse de rotation des roues 1,5, ces informations provenant de capteurs associés aux freins 1 et 5.
- un concentrateur de données CD48 qui reçoit et met en forme des informations électriques telles que la pression dans les pneumatiques des roues 4,8, la température des freins 4,8, la vitesse de rotation des roues 4,8, ces informations provenant de capteurs associés aux freins 4,8 ;
- un concentrateur de données CD100 de l'atterrisseur principale gauche 100 qui reçoit et met en forme des informations de position de l'atterrisseur (enfoncement de l'amortisseur, position angulaire du balancier portant les roues...) ou des informations d'états liés à la manoeuvre de l'atterrisseur tels que des portes (ouverte, fermée), des crochets de verrouillage (verrouillé, déverrouillé);
- un concentrateur de données CD300 de l'atterrisseur auxiliaire 300 qui reçoit et met en forme des informations de position de l'atterrisseur auxiliaire (enfoncement de l'amortisseur, position angulaire du balancier portant les roues...) ou d'informations d'états liées à la manoeuvre de l'atterrisseur tels que des portes (ouverte, fermée), des crochets de verrouillage (verrouillé, déverrouillé), mais également des informations sur la position angulaire des roues de l'atterrisseur auxiliaire;
- un concentrateur des données pilote CDP qui reçoit et met en forme des signaux en provenance des pédales de frein, de divers commutateurs de volants d'orientation ou encore de manches actionnés par le pilote ou le copilote (en variante, on pourra prévoir des concentrateurs de données séparés pour le pilote et pour le copilote).

L'architecture de l'invention comporte un second réseau de communication en étoile B comportant un contrôleur de réseau qui est relié :
- aux modules de puissance M2 et M6 des freins 2 et 6 internes de l'atterrisseur principal gauche 100 ;
- aux modules de puissance M3 et M7 des freins 3 et 7 internes de l'atterrisseur principal droit 200 ;
- à l'organe de distribution D200 associé aux actionneurs A200 de l'atterrisseur principal droit 200 ;
- à l'organe de distribution D300 associé aux actionneurs A300 de l'atterrisseur auxiliaire 300.

Le contrôleur de réseau B est également relié à deux unités de commande B1 et B2 qui sont aptes à générer des consignes ou des ordres à destination des modules de puissance et des organes de distribution reliés au contrôleur de réseau B. Les deux unités de commande sont en permanence actives, l'une des unités de commande générant les consignes et ordres en étant surveillée par l'autre unité de commande.

Les unités de commande B1 et B2 sont donc aptes à gérer :
- le freinage des freins 2,6,3,7 ;
- la manoeuvre de l'atterrisseur principal droit 200 et la manoeuvre de l'atterrisseur auxiliaire 300 ;
- l'orientation des roues de l'atterrisseur auxiliaire 300.

Pour ce faire, les unités de commande B1 et B2 reçoivent des informations de concentrateurs de données également reliés au réseau de communication B :
- un concentrateur de données CD26 qui reçoit et met en forme des informations électriques telles que la pression dans les pneumatiques des roues 2,6, la température des freins 2,6, la vitesse de rotation des roues 2,6, ces informations provenant de capteurs associés aux freins 2,6 ;
- un concentrateur de données CD37 qui reçoit et met en forme des informations électriques telles que la pression dans les pneumatiques des roues 3,7, la température des freins 3,7, la vitesse de rotation des roues 3,7 que, ces informations provenant de capteurs associés aux freins 3 et 7 ;
- un concentrateur de données CD200 de l'atterrisseur principal droit 200 qui reçoit et met en forme des informations de position de l'atterrisseur (enfoncement de l'amortisseur, position angulaire du balancier portant les roues...) ou d'informations d'états liées à la manoeuvre de l'atterrisseur tels que des portes (ouverte, fermée), des crochets de verrouillage (verrouillé, déverrouillé);
- le concentrateur de données CD300 de l'atterrisseur auxiliaire 300;
- le concentrateur des données pilote CDP.

Selon un aspect essentiel de l'invention, les réseaux de communication A et B sont du type synchrone. Ainsi, chacun des abonnés aux réseaux de communication communique une information selon un planning prédéterminé géré par le contrôleur de réseau correspondant, cette information étant mise par le contrôleur de réseau à la disposition de tous les autres abonnés. La gestion synchrone permet, donc, par l'élimination des conflits d'accès au réseau de communication, un déterminisme de la transmission des informations, et donc une garantie d'un temps maximal de transmission extrêmement court (de l'ordre de quelques millisecondes) compatible avec la mise en oeuvre d'un asservissement d'antiglissement par les unités de commande. L'électronique assurant le freinage peut ainsi être placée dans les unités de commande, donc à l'abri dans une zone sécurisée de l'aéronef. Ainsi, il devient inutile de prévoir des calculateurs spécifiques délocalisés pour la mise en oeuvre de l'antiglissement.

La fonction de freinage est ainsi assurée selon l'invention par les mêmes unités que celles qui assurent la fonction de manoeuvre et la fonction d'orientation.

L'architecture de l'invention présente de nombreux autres avantages par rapport aux architectures connues :
- les unités de commande A1,A2,B1,B2 sont toutes identiques : elles ont les mêmes entrées/sorties, les mêmes cartes électronique, et sont toutes aptes à assurer les mêmes fonctions, ce qui abaisse singulièrement leur coût de fabrication;
- les unités de commandes se surveillent mutuellement au sein d'un même réseau de communication de sorte qu'il est inutile de prévoir dans chacune des unités de commande une voie active et une voie de surveillance, ce qui diminue encore le coût de fabrication des unités de commande. En cas de perte de l'une des unités, l'autre des unités de commande est adaptée à prendre le relais de l'unité de commande défaillante et assurer la totalité des fonctions qui était assurées par l'unité de commande défaillante ;
- la certification de l'architecture devient très simple, le caractère déterministe du réseau de communication synchrone permettant de dénombrer exactement (et donc tester) toutes les situations possibles susceptibles de survenir lors du fonctionnement du réseau de communication. Cette simplicité inhérente à l'utilisation de réseaux de communication synchrones permet d'augmenter la sécurité de l'architecture de l'invention, mais également d'en diminuer considérablement le temps et le coût de certification ;
- l'utilisation de réseaux de communication en étoile permet d'augmenter encore la sécurité de l'architecture de l'invention. En effet, la perte d'une liaison entre l'un des contrôleurs de réseau et l'un des abonnés à ce contrôleur n'entraîne pas la remise en cause de l'intégralité du réseau de communication, mais uniquement de cette liaison. Le reste du réseau de communication peut continuer à fonctionner. Par exemple, la perte du concentrateur de données CD100 de l'atterrisseur principal gauche 100 perturbe la manoeuvre de l'atterrisseur principal gauche 100, mais ne remet pas en cause les autres fonctions, comme le freinage ou l'orientation des roues de l'atterrisseur auxiliaire.

De préférence, les réseaux de communication A et B sont redondants. Cette redondance est symbolisée sur les figures par les doubles flèches (flèche en trait plein, flèche en trait pointillé) illustrant la double liaison entre les contrôleurs de réseau et les abonnés correspondants. La redondance permet de renforcer considérablement la sécurité de l'architecture de l'invention. En effet, il est possible, au niveau de chacun des abonnés, d'organiser un contrôle de sécurité en vérifiant que les informations reçues du contrôleur et véhiculées par les deux voies redondées de la liaison entre le contrôleur et l'abonné concerné sont bien identiques.

De préférence également, les contrôleurs de réseau A,B mettent en oeuvre un protocole de communication sécurisé qui prend en charge les tâches de vérification de la cohérence des données transitant dans les réseaux de communication, par exemple en répétant systématiquement par trois fois les données à envoyer et en vérifiant que les trois répétitions sont identiques. La prise en charge de la vérification de la cohérence des données par le contrôleur de réseau permet de délester les unités de commande de ces aspects de vérification, ce qui en simplifie encore la conception. Les unités de commande sont ainsi déchargées des tâches de vérification de la cohérence des données transmises par les réseaux de communication, ce qui simplifie encore les unités de commande.

De préférence, les réseaux de communication en étoile sont de type TTP (pour time triggered protocol), c'est à dire des réseaux de communication synchrones, déterministes, multiplexés, et redondants.

On remarquera qu'en cas de perte de l'un des réseaux de communication en étoile, il est toujours possible d'assurer au moyen de l'autre réseau de communication:
- un freinage partiel sur les quatre roues freinées contrôlées par le réseau de communication valide (soit les roues externes 1,5,4,8 soit les roues internes 2,6,3,7, cette répartition étant expressément choisie pour que le freinage partiel reste toujours symétrique) ;
- la sortie de l'atterrisseur principal associé au réseau de communication valide ;
- la sortie de l'atterrisseur auxiliaire et la commande de l'orientation des roues de l'atterrisseur auxiliaire.

La sortie de l'atterrisseur principal contrôlé par le réseau de communication défaillant est alors assurée par des moyens de secours classiques (par exemple une sortie par gravité et verrouillage automatique à ressort).

L'architecture de l'invention présente donc une sécurité particulièrement importante, tout en étant globalement bien moins onéreuse à construire et à certifier que les architectures existantes.

Selon un aspect particulier de l'invention, les unités de commandes A1, A2, B1,B2 sont également connectées à un réseau de communication BC de l'aéronef, par exemple de type bidirectionnel asynchrone AFDX, auquel sont connectés d'autres systèmes de l'aéronef comme un concentrateur de données de vol CDV (pouvant fournir des informations telles que la température extérieure, la vitesse de l'aéronef...) et divers calculateurs, dont des calculateurs de commande de vol CCV. Le bus BC permet aux quatre unités de commande A1,A2,B1,B2 de dialoguer entre elles, de s'échanger des données et de se surveiller mutuellement, ce qui augmente encore la sécurité de l'architecture de l'invention.

Selon un autre aspect particulier de l'invention, l'alimentation en énergie de l'architecture de l'invention fait appel à trois bus d'alimentation PW1, PW2 et PW3. Les bus PW1 et PW2 sont adaptés à transmettre la puissance électrique provenant d'alternateurs (électriquement indépendants) entraînés par les moteurs de l'aéronef. Le bus d'alimentation PW3 est par exemple adapté à transmettre la puissance électrique provenant d'une unité de puissance auxiliaire ou d'une source de courant continu (comme des batteries).

De préférence, l'unité de commande A1 est alimentée par le bus d'alimentation PW1, l'unité de commande B2 par le bus d'alimentation PW2 et les unités de commande A2 et B1 par le bus d'alimentation PW3. On voit sur les figures l'alimentation des unités de commande figurées par des flèches à demi-pointe.

Ainsi, si l'un quelconque des bus d'alimentation défaille, il reste dans chacun des réseaux de communication A,B au moins une unité de commande apte à assurer le freinage. La défaillance d'un bus d'alimentation ne remet donc pas en cause la commande du freinage.

De préférence, l'un au moins des contrôleurs de réseau A,B est alimenté par le bus d'alimentation PW3, de sorte qu'en cas de défaillance des moteurs de l'aéronef, il soit toujours possible d'assurer un freinage partiel avec les freins commandés par le réseau de communication alimenté par le bus d'alimentation PW3.

De même, pour chacun des réseaux de communication A et B, une partie des concentrateurs relié au réseau de communication correspondant est de préférence alimenté par l'un des bus d'alimentation PW1 ou PW2, l'autre partie étant alimentée par le bus d'alimentation PW3. Ainsi, une perte de l'un des bus d'alimentation n'entraîne pas la perte de toutes les informations issues des concentrateurs.

De préférence, on applique une ségrégation similaire pour l'alimentation des modules de puissance reliés aux réseaux de communication A et B.

La ségrégation ainsi réalisée au niveau de l'alimentation de tous les abonnés aux réseaux de communication A et B augmente encore la sécurité de l'architecture de l'invention.

L'invention n'est pas limitée à ce qui vient d'être décrit, mais bien au contraire englobe toute variante entrant dans le cadre défini par les revendications.

En particulier, bien que l'on ait indiqué que les réseaux de communication A et B soient des réseaux de communication synchrones de type TTP, on pourra utiliser d'autres types de réseaux de communication (synchrones ou non) du moment qu'ils aient des caractéristiques de transmission (gestion des conflits d'accès, temps de transmission...) compatibles avec la mise en oeuvre d'un asservissement d'antiglissement (c'est-à-dire un asservissement rapide à temps d'échantillonnage très court, de l'ordre de quelques millisecondes).

En outre, on pourra utiliser d'autres topologies de réseau de communication que la topologie en étoile.

Bien que l'on ait indiqué que les concentrateurs de données de freinage recueillent et mettent en forme des informations telles que la température, la pression, la vitesse, les concentrateurs pourront recueillir d'autres informations telles que l'usure des freins ou l'effort exercé par les freins. De préférence, les informations critiques pour la mise en oeuvre la fonction de freinage (en particulier l'information de vitesse) seront dupliquées et mises à disposition du réseau de communication associé par l'intermédiaire de deux concentrateurs différents, de sorte que si l'un défaille, l'autre puisse continuer à fournir l'information.

Bien que l'on ait présenté l'invention en application à un aéronef comportant deux atterrisseurs principaux à quatre roues freinées et un atterrisseur auxiliaire, l'invention n'est pas limitée à ce type d'aéronef et se généralise aisément à un aéronef comportant d'autres installations d'atterrisseurs, aussi diverses que celles l'A320 ou le B737 (deux atterrisseurs principaux à deux roues freinées, un atterrisseur auxiliaire à roues orientables), du B777 (deux atterrisseurs à six roues freinées à essieu arrière orientable, un atterrisseur auxiliaires à roues orientables), ou encore de l'A380 (deux atterrisseurs principaux de voilure à quatre roues freinées, deux atterrisseurs principaux de fuselage à six roues freinées, un atterrisseur auxiliaire à roues orientables).

## Revendications

1. Architecture de système de gestion d'atterrisseurs d'aéronef apte à assurer au moins l'une des fonctions choisie parmi :
- la manoeuvre d'extension/rétraction des atterrisseurs rétractables au moyen d'actionneurs de manoeuvre (105, 106, 108 ; 205, 206, 208 ; 305, 306, 308) et d'informations de manoeuvre (CD100 ; CD200 ; CD300) en provenance de capteurs associés ;
- l'orientation de roues orientables portées par l'un au moins des atterrisseurs au moyen d'actionneurs d'orientation (309) et d'informations d'orientation (CD300) en provenance de capteurs associés ;
l'architecture étant apte à assurer également le freinage des roues freinées portées par l'un au moins des atterrisseurs au moyen d'actionneurs de freinage (1...8) et d'informations de freinage (CD15, CD48 ; CD26, CD37) en provenance de capteurs associés;
l'architecture comportant au moins un réseau de communication (A ; B) auquel sont reliés :
- au moins une partie des actionneurs de manoeuvre et/ou des actionneurs d'orientation et les capteurs associés à ces actionneurs,
- une ou plusieurs unités de commande (A1,A2;B1,B2) adaptées à commander les actionneurs de manoeuvre et/ou les actionneurs d'orientation reliés au réseau de communication en fonction des informations délivrées par les capteurs associés,
**caractérisé en ce qu**'au moins une partie des actionneurs de freinage et les capteurs associés à ces actionneurs sont reliés au réseau de communication, la ou les unités de commande étant adaptées à commander les actionneurs de freinage reliés au réseau de communication en fonction des informations délivrées par les capteurs associés, le réseau de communication ayant des caractéristiques de transmission adaptées à la mise en oeuvre par la ou les unités de commande d'un asservissement d'antiglissement pour la commande des actionneurs de freinage.

2. Architecture selon la revendication 1, comportant :
- un premier réseau de communication (A) auquel sont reliés une première partie des actionneurs de freinage (1, 5, 4, 8) ;
- un deuxième réseau de communication (B) auquel sont reliés une seconde partie des actionneurs de freinage (2, 6, 3, 7) complémentaire de la première,
les première et seconde parties étant choisies de sorte qu'en cas de perte de l'un des réseaux de communication, un freinage partiel symétrique puisse être assuré par la partie des actionneurs reliés à l'autre réseau de communication.

3. Architecture selon la revendication 2, pour un aéronef comportant un atterrisseur auxiliaire (300) et des atterrisseurs principaux (100, 200), dans laquelle :
• sont reliés au premier réseau de communication (A) :
- les actionneurs de manoeuvre (105, 106, 108) d'une première partie des atterrisseurs principaux (100) et les capteurs associés (CD100) ;
- les actionneurs de manoeuvre (305, 306, 308) de l'atterrisseur auxiliaire (300) et les capteurs associés (CD300) ;
• sont reliés au second réseau de communication (B):
- les actionneurs de manoeuvre (205, 206, 208) d'une seconde partie des atterrisseurs principaux (200) complémentaire de la première partie et les capteurs associés (CD200) ;
- les actionneurs de manoeuvre de l'atterrisseur auxiliaire (305, 306, 308) et les capteurs associés (CD300).

4. Architecture selon la revendication 2, dans laquelle la ou les unités de commande (A1, A2) reliées au premier réseau de communication (A) et la ou les unités de commande (B1, B2) reliées du deuxième réseau de communication (B) sont connectées entre elles par un troisième réseau de communication (BC) indépendant des deux premiers.

5. Architecture selon la revendication 2, dans laquelle chacun des réseaux de communication (A, B) est relié à au moins quatre unités de commande (A1, A2 ; B1, B2), l'une des unités de commande (A1) du premier réseau de communication (A) étant alimentée par un premier bus d'alimentation (PW1), l'une des unités de commande (B2) du deuxième réseau de communication (B) étant alimentée par un deuxième bus d'alimentation (PW2), les deux autres unités de commande étant alimentées par un troisième bus d'alimentation (PW3).

6. Architecture selon la revendication 1, dans laquelle le réseau de communication (A ; B) est de type synchrone.

7. Architecture selon la revendication 1, dans laquelle le réseau de communication (A, B) est dupliqué.

8. Architecture selon la revendication 1, dans laquelle le réseau de communication (A, B) est en étoile.

9. Architecture selon la revendication 1, dans laquelle le réseau de communication (A, B) possède un contrôleur adapté à prendre en charge des tâches de vérification de cohérence des données transmises sur le réseau de communication.

## Claims

1. A system architecture for managing aircraft landing gear and suitable for performing at least one of the functions selected from:
- retracting/extending retractable undercarriages by means of retraction/extension actuators (105, 106, 108; 205, 206, 208; 305, 306, 308) and retraction/extension information (CD100; CD200; CD300) coming from associated sensors;
- steering steerable wheels carried by at least one of the undercarriages by means of steering actuators (309) and steering information (CD300) coming from associated sensors;
the architecture being suitable also for braking braked wheels carried by at least one of the undercarriages by means of braking actuators (1, ..., 8) and braking information (CD15, CD48; CD26, CD37) coming from associated sensors;
the architecture comprising at least one communications network (A; B) having connected thereto:
- at least a fraction of the retraction/extension actuators, and/or of the steering actuators, and the sensors associated with said actuators; and
- one or more control units (A1, A2; B1, B2) suitable for controlling the retraction/extension actuators and/or the steering actuators connected to the communications network as a function of information delivered by the associated sensors;
the architecture being **characterized in that** at least a fraction of the braking actuators and the sensors associated with said actuators are connected to the communications network, the control unit(s) being adapted to control the braking actuators connected to the communications network as a function of information delivered by the associated sensors, the communications network having transmission characteristics adapted to enabling the control unit(s) to implement antilock servo-control for controlling the braking actuators.

2. An architecture according to claim 1, comprising:
- a first communications network (A) having a first fraction of the braking actuators (1, 5, 4, 8) connected thereto; and
- a second communications network (B) having a second fraction of the braking actuators (2, 6, 3, 7) complementary to the first fraction connected thereto;
the first and second fractions being selected in such a manner that in the event of one of the two communications networks failing, partial braking can be performed symmetrically by the fraction of the actuators connected to the other communications network.

3. An architecture according to claim 2, for an airplane having a nose undercarriage (300), and main undercarriages (100, 200), in which:
- the first communications network (A) is connected to:
- the retraction/extension actuators (105, 106, 108) of a first fraction of the main undercarriages (100) and the associated sensors (CD300); and
- the retraction/extension actuators (305, 306, (308) of the nose undercarriage (300) and the associated sensors (CD300); and
- the second communications network (B) is connected to:
- the retraction/extension actuators (205, 206, 208) of a second fraction of the main undercarriages (200) complementary to the first fraction, and the associated sensors (CD200); and
- the retraction/extension actuators of the nose undercarriage (305, 306, 308) and the associated sensors (CD300).

4. An architecture according to claim 2, in which the control unit(s) (A1, A2) connected to the first communications network (A), and the control unit(s) (B1, B2) connected to the second communications network (B), are interconnected by a third communications network (BC) independent of the first two networks.

5. An architecture according to claim 2, in which each of the communications networks (A, B) is connected to at least four control units (A1, A2; B1, B2), one of the control units (A1) of the first communications network (A) being powered by a first power supply bus (PW1), one of the control units (B2) of the second communications network (B) being powered by a second power supply bus (PW2), and the other two control units being powered by a third power supply bus (PW3).

6. An architecture according to claim 1, in which the communications network (A, B) is of the synchronous type.

7. An architecture according to claim 1, in which the communications network (A, B) is duplicated.

8. An architecture according to claim 1, in which the communications network (A, B) is a star network.

9. An architecture according to claim 1, in which the communications network (A, B) possesses a controller suitable for implementing tasks of verifying the coherence of the data transmitted over the communications network.

## Patentansprüche

1. Architektur eines Steuerungssystems zur Steuerung von Flugzeugfahrwerken, die dazu geeignet ist, mindestens eine unter den folgenden ausgewählte Funktion zu gewährleisten:
- das Ausfahr-/Einfahrmanöver der einziehbaren Fahrwerke mit Hilfe von Manöveraktuatoren (105, 106, 108; 205, 206, 208; 305, 306, 308) und Manöverinformationen (CD100; CD200; CD300) aus dazugehörigen Sensoren,
- die Ausrichtung der schwenkbaren Räder, die von mindestens einem der Fahrwerke getragen werden, mit Hilfe von Ausrichtungsaktuatoren (309) und Ausrichtungsinformationen (CD300) aus dazugehörigen Sensoren,
wobei die Architektur dazu geeignet ist, ebenso das Bremsen der gebremsten Räder, die von mindestens einem der Fahrwerke getragen werden, mit Hilfe von Bremsaktuatoren (1...8) und Bremsinformationen (CD15, CD48; CD26, CD37) aus dazugehörigen Sensoren sicherzustellen,
wobei die Architektur mindestens ein Kommunikationsnetz (A; B) umfasst, mit dem verbunden sind:
- mindestens ein Teil der Manöveraktuatoren und/oder der Ausrichtungsaktuatoren und die zu diesen Aktuatoren gehörenden Sensoren,
- eine oder mehrere Steuereinheiten (A1, A2; B1, B2), die dazu geeignet sind, die Manöveraktuatoren und/oder die Ausrichtungsaktuatoren, die mit dem Kommunikationsnetz verbunden sind, in Abhängigkeit von Informationen, die von den dazugehörigen Sensoren geliefert werden, zu steuern,
**dadurch gekennzeichnet, dass** mindestens ein Teil der Bremsaktuatoren und der zu diesen Aktuatoren gehörenden Sensoren mit dem Kommunikationsnetz verbunden sind, wobei die Steuereinheit bzw. die Steuereinheiten dazu geeignet sind, die mit dem Kommunikationsnetz verbundenen Bremsaktuatoren in Abhängigkeit der von den dazugehörigen Sensoren gelieferten Informationen zu steuern, wobei das Kommunikationsnetz Übertragungseigenschaften hat, die dazu geeignet sind, über die Steuereinheit bzw. die Steuereinheiten eine Antirutschregelung für die Steuerung der Bremsaktuatoren durchzuführen.

2. Architektur nach Anspruch 1, umfassend:
- ein erstes Kommunikationsnetz (A), mit dem ein erster Teil der Bremsaktuatoren (1, 5, 4, 8) verbunden ist;
- ein zweites Kommunikationsnetz (B), mit dem ein zweiter Teil der Bremsaktuatoren (2, 6, 3, 7) verbunden ist, der komplementär zum ersten ist,
wobei der erste und der zweite Teil so gewählt werden, dass im Fall eines Ausfalls eines der Kommunikationsnetze eine symmetrische Teilbremsung durch den Teil der Aktuatoren, die mit dem anderen Kommunikationsnetz verbunden sind, sichergestellt werden kann.

3. Architektur nach Anspruch 2, für ein Flugzeug, das ein Hilfsfahrwerk (300) und Hauptfahrwerke (100, 200) umfasst, wobei:
• mit dem ersten Kommunikationsnetzwerk (A) verbunden sind:
- die Manöveraktuatoren (105, 106, 108) eines ersten Teils von Hauptfahrwerken (100) und die dazugehörigen Sensoren (CD 100),
- die Manöveraktuatoren (305, 306, 308) des Hilfsfahrwerks (300) und die dazugehörigen Sensoren (CD300),
• mit dem zweiten Kommunikationsnetz (B) verbunden sind:
- die Manöveraktuatoren (205, 206, 208) eines zweiten Teils von Hauptfahrwerken (200), der komplementär zum ersten Teil ist, und die dazugehörigen Sensoren (CD200),
- die Manöveraktuatoren (305, 306, 308) des Hilfsfahrwerks und die dazugehörigen Sensoren (CD300).

4. Architektur nach Anspruch 2, bei der die Steuereinheit bzw. die Steuereinheiten (A1, A2), die mit dem ersten Kommunikationsnetz (A) verbunden sind, und die Steuereinheit bzw. die Steuereinheiten (B1, B2), die mit dem zweiten Kommunikationsnetz (B) verbunden sind, untereinander über ein drittes Kommunikationsnetz (BC) verbunden sind, das von den beiden ersten unabhängig ist.

5. Architektur nach Anspruch 2, bei der jedes der Kommunikationsnetze (A, B) mit mindestens vier Steuereinheiten (A1, A2; B1, B2) verbunden ist, wobei eine der Steuereinheiten (A1) des ersten Kommunikationsnetzes (A) von einem ersten Versorgungsbus (PW1) versorgt wird, wobei eine der Steuereinheiten (B2) des zweiten Kommunikationsnetzes (B) von einem zweiten Versorgungsbus (PW2) versorgt wird, und wobei die beiden anderen Steuereinheiten von einem dritten Versorgungsbus (PW3) versorgt werden.

6. Architektur nach Anspruch 1, bei der das Kommunikationsnetz (A; B) synchroner Art ist.

7. Architektur nach Anspruch 1, bei der das Kommunikationsnetz (A, B) verdoppelt ist.

8. Architektur nach Anspruch 1, bei der das Kommunikationsnetz (A, B) sternförmig ist.

9. Architektur nach Anspruch 1, bei der das Kommunikationsnetz (A, B) eine Kontrollvorrichtung aufweist, die dazu geeignet ist, Aufgaben zur Verifizierung der Kohärenz der Daten zu übernehmen, die über das Kommunikationsnetz übertragen werden.
